(19) Europäisches Patentamt
European Patent Office
Office européen des brevets

(11) **EP 1 356 582 B1**

(12) **EUROPÄISCHE PATENTSCHRIFT**

(45) Veröffentlichungstag und Bekanntmachung des Hinweises auf die Patenterteilung:
**09.02.2005 Patentblatt 2005/06**

(21) Anmeldenummer: **02792895.1**

(22) Anmeldetag: **05.12.2002**

(51) Int Cl.⁷: $H02P\ 6/14$, $H02P\ 6/08$

(86) Internationale Anmeldenummer:
**PCT/EP2002/013772**

(87) Internationale Veröffentlichungsnummer:
**WO 2003/052920 (26.06.2003 Gazette 2003/26)**

(54) **VERFAHREN ZUR VERARBEITUNG VON DATEN EINES ELEKTRONISCH KOMMUTIERTEN MOTORS, UND MOTOR ZUR DURCHÜHRUNG EINES SOLCHEN VERFAHRENS**

METHOD FOR PROCESSING DATA FOR AN ELECTRONICALLY COMMUTATED MOTOR AND MOTOR FOR CARRYING OUT SAID METHOD

PROCEDE POUR TRAITER DES DONNEES AVEC UN MOTEUR A COMMUTATION ELECTRONIQUE ET MOTEUR CONçU POUR METTRE EN OEUVRE CE PROCEDE

(84) Benannte Vertragsstaaten:
**AT BE BG CH CY CZ DE DK EE ES FI FR GB GR IE IT LI LU MC NL PT SE SI SK TR**

(30) Priorität: **15.12.2001 DE 10161688**

(43) Veröffentlichungstag der Anmeldung:
**29.10.2003 Patentblatt 2003/44**

(73) Patentinhaber: **ebm-papst St. Georgen GmbH & Co. KG**
**78112 St. Georgen (DE)**

(72) Erfinder:
• **SCHONDELMAIER, Hans-Dieter**
  **78112 St. Georgen (DE)**
• **KUNER, Arnold**
  **78112 St. Georgen (DE)**

(56) Entgegenhaltungen:
**EP-B- 0 986 855**          WO-A-97/25768
**DE-A- 19 845 626**

**Beschreibung**

Die Erfindung betrifft ein Verfahren zur Verarbeitung von Daten bei einem elektronisch kommutierten Motor, und sie betrifft einen elektronisch kommutierten Motor zur Durchführung eines solchen Verfahrens

Die DE 198 45 626 A1 offenbart einen elektronisch kommutierten Motor, welcher einen permanentmagnetischen Rotor, eine Anordnung zur Erfassung der Drehstellung dieses Rotors, und einen Stator mit mindestens einem Wicklungsstrang aufweist, wobei dem Motor zur Steuerung seiner Kommutierung und zur Durchführung von Rechenvorgängen ein Rechner nach Art eines Mikroprozessors oder Mikrocontrollers und ein von diesem Rechner auszuführendes Programm zugeordnet sind, welch letzteres zur Ausführung folgender Schritte ausgebildet ist:

In sich wiederholenden Schritten wird die drehzahlabhängige Zeitdauer erfasst, welche der Rotor zum Durchlaufen eines vorgegebenen Drehwinkelbereichs benötigt.

Ein elektronisch kommutierter Motor hat gewöhnlich eine Endstufe, die von einem Ansteuer-IC oder einem Rechner gesteuert wird und die von diesem Ansteuer-IC oder Rechner möglichst exakt eingeschaltet und wieder ausgeschaltet werden muss, damit man eine konstante Drehzahl und einen ruhigen Lauf des Motors erhält

In der Praxis ist das nur schwierig zu realisieren, da ein Rechner nach Art eines Mikroprozessors oder Mikrocontrollers, der die Endstufe steuert, auch weitere zeitkritische Aufgaben ausführen muss, z.B. die Verarbeitung eines Frequenzsignals oder eines PWM-Signals und/oder die Regelung der Drehzahl des Motors. Auch diese Signale müssen sehr genau verarbeitet werden, damit sich ein ruhiger Lauf des Motors ergibt

Man hat hierfür verschiedene Möglichkeiten. Z.B. können die Endstufen über Interruptvorgänge sehr genau gesteuert werden, wodurch dann aber die Erfassung anderer Signale ungenauer wird, da ja während eines Interrupts für die Ansteuerung der Endstufe die genaue Erfassung anderer Signale blockiert ist. Andererseits könnte man solche anderen Signale per Interrupt erfassen, und stattdessen die Endstufen über ein Verfahren steuern, das man als Polling bezeichnet. Wird in einem solchen Fall vom Programm gerade ein Signal erfasst, so ist ein gleichzeitiges Überwachen der Endstufen nicht möglich. Dies hat zur Folge, dass der Strom in der betreffenden Endstufe zu spät ein- oder ausgeschaltet wird, wodurch der Motors ungleichmäßig läuft.

Deshalb sind beide genannten Lösungsmöglichkeiten nicht befriedigend.

Man könnte auch einen leistungsfähigeren Rechner verwenden, welcher mehrere zeitkritische Funktionen über entsprechende Interrupts behandeln kann. Ein solcher Rechner müsste dann aber eine hohe Taktfrequenz haben, damit er die Interrupt-Routinen möglichst schnell ausführt, denn auch bei einem solchen Rechner können diese Routinen nicht parallel ausgeführt werden. Außerdem wäre eine solche Lösung für die meisten Anwendungen zu teuer.

Es ist deshalb eine Aufgabe der Erfindung, ein Verfahren zur Verarbeitung von Daten bei einem elektronisch kommutierten Motor, und einen elektronisch kommutierten Motor zur Ausführung eines solchen Verfahrens bereit zu stellen.

Nach der Erfindung wird diese Aufgabe gelöst durch ein Verfahren gemäß Patentanspruch 1. Man erhält so mit einfachen und preiswerten Mitteln eine bessere Verteilung der zur Verfügung stehenden Systemzeit, so dass zeitkritische Funktionen ungestört ausgeführt werden können. Da man im voraus die zeitkritischen Drehstellungsbereiche des Rotors, in denen Interruptvorgänge stattfinden, und auch die Platzierung der Bestromungsblöcke, kennt, können andere Rechenoperationen mit einem erfindungsgemäßen Verfahren in solche Bereiche der Rotordrehung verlegt werden, in welchen keine anderen zeitkritischen Signale zu verarbeiten sind, so dass man auch längere Rechenoperationen ausführen kann, ohne dass dies den Lauf des Motors negativ beeinflusst. Auf diese Weise wird es möglich, auch mit einem einfachen Mikrocontroller einen elektronisch kommutierten Motor sicher zu betreiben und einen ruhigen Motorlauf sicherzustellen.

Eine andere Lösung der gestellten Aufgabe ist Gegenstand des Patentanspruchs 6. Ein solcher Motor kann - bei Verwendung eines einzigen einfachen Mikrocontrollers - viele Funktionen realisieren, z.B. die Berechnung eines Sollwerts aus einem zugeführten Signal, die Messung eines Drehzahl-Istwerts, eine Drehzahlregelung, die Erzeugung eines Alarmsignals bei starken Drehzahlabweichungen, und eine exakte Kommutierung, welche zu einem ruhigen Lauf des Motors führt.

Weitere Einzelheiten und vorteilhafte Weiterbildungen der Erfindung ergeben sich aus dem im folgenden beschriebenen und in der Zeichnung dargestellten, in keiner Weise als Einschränkung der Erfindung zu verstehenden Ausführungsbeispiel, sowie aus den Unteransprüchen. Es zeigt:

Fig. 1  ein stark schematisiertes Übersichtsschaltbild eines elektronisch kommutierten Motors und eines zu seiner Kommutierungs-Steuerung und Drehzahl-Regelung vorgesehenen Rechners 43,

Fig. 2  ein Übersichts-Flussdiagramm, welches in schematischer Form das Hauptprogramm mit den Vorgängen darstellt, die bei einem solchen elektronisch kommutierten Motor während der Drehung des Rotors ablaufen,

Fig. 3  eine Übersichtsdarstellung zur Erläuterung der Erfindung,

Fig. 4    eine Darstellung analog Fig. 3, welche die Verhältnisse im Motor bei einem hohen Motorstrom zeigt, wie er z.B. bei hohen Drehzahlen auftritt,

Fig. 5    eine Darstellung analog Fig. 3 und 4, welche die Verhältnisse im Motor bei einem niedrigen Motorstrom zeigt, wie er bei niedrigen Drehzahlen auftritt,

Fig. 6    eine Routine Pos_Fct, welche zeigt, wie bestimmte Rechehvorgänge nach einem vorgegebenen Kriterium bestimmten Teilen eines Programmablaufs zugeordnet werden,

Fig. 7    eine Routine, welche zeigt, welche Vorgänge bei einem Hall-Interrupt ablaufen,

Fig. 9    eine schematische Darstellung, welche einen beispielhaften Ablauf für den Fall zeigt, dass die Stromimpulse kurz sind und bestimmte Rechenvorgänge in der Zeit vor einem Stromimpuls ausgeführt werden, und

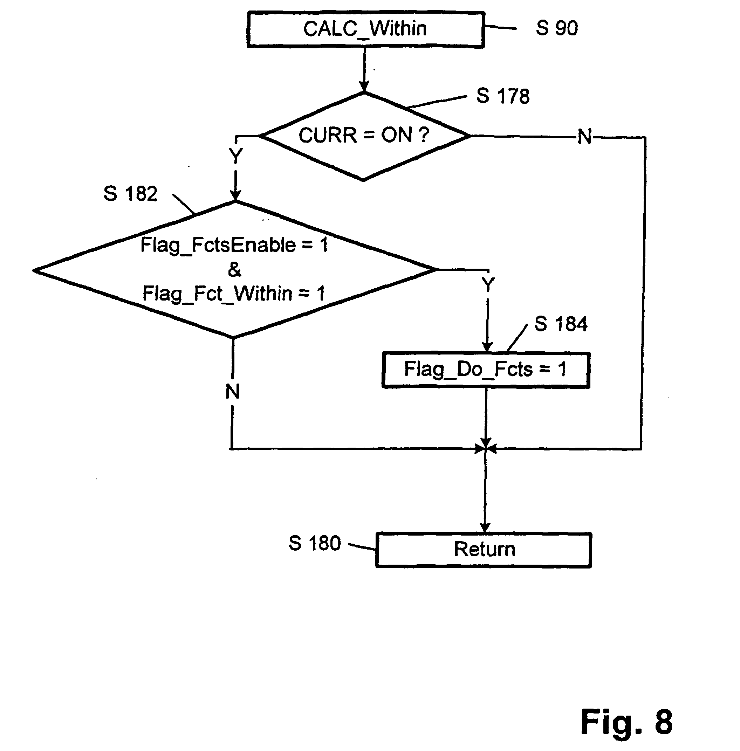

Fig. 8    eine Routine, welche zeigt, welche Vorgänge ablaufen, wenn eine bestimmte Routine dann abgearbeitet werden soll, wenn ein Strom in einem der Stränge der Motorwicklung fließt,

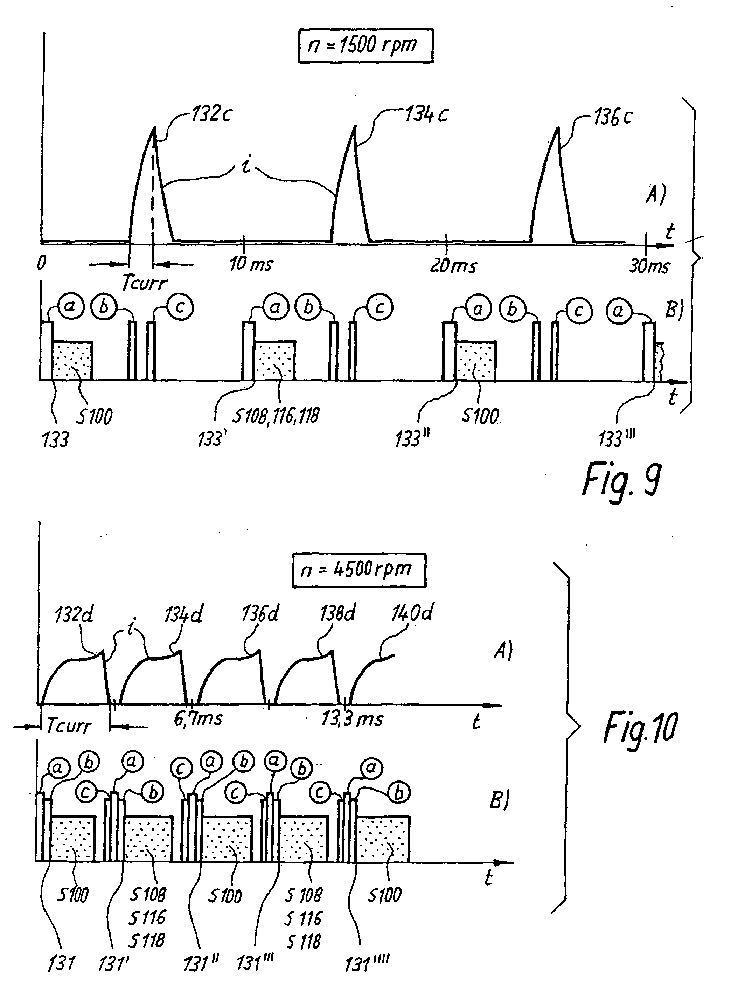

Fig. 10   eine schematische Darstellung, welche einen beispielhaften Ablauf für den Fall zeigt, dass die Stromimpulse lang sind und bestimmte Rechenvorgänge während der Dauer eines Stromimpulses ausgeführt werden.

In der nachfolgenden Beschreibung werden gleiche oder gleich wirkende Teile oder Funktionen mit denselben Bezugszeichen bezeichnet und gewöhnlich nur einmal beschrieben, z.B. die Stromimpulse 132, 132a, 132b, 132c bzw. 132d.

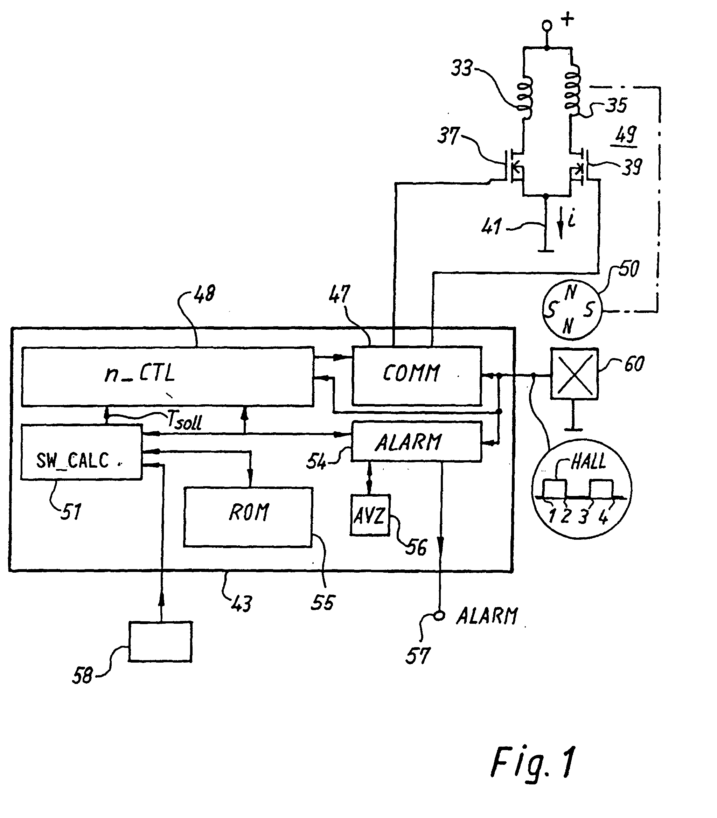

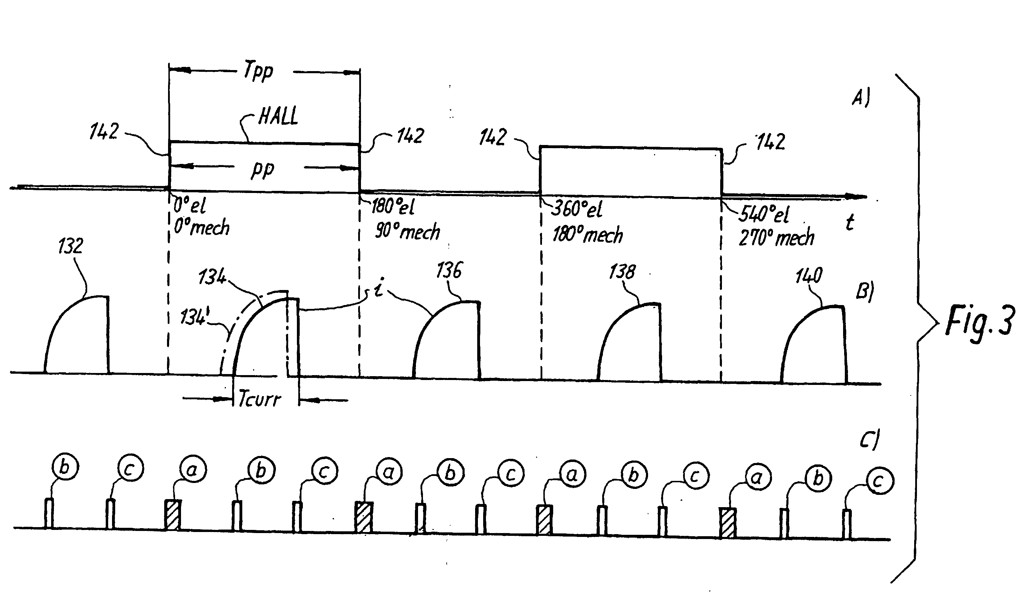

**Fig. 1** zeigt einen Elektromotor 49 mit einem permanentmagnetischen Rotor 50, der bei diesem Beispiel als vierpoliger Rotor dargestellt ist, also zwei Nordpole und zwei Südpole hat, die alle eine Länge von 90° = 180° el. mech. haben. Man sagt in diesem Fall in der Terminologie des Elektromaschinenbaus, dass die Polteilung PP (Englisch: pole pitch) eines Pols 180° el. ist, und ein Hall-IC 60, der dem Rotor 50 gegenüberliegt, erzeugt bei dessen Drehung ein rechteckförmiges Signal HALL, wie es in Fig. 3A dargestellt ist.

Bei einem solchen Signal HALL kann man, wie in Fig. 3A dargestellt, den Abstand PP zwischen zwei benachbarten Flanken 142, 142 leicht messen, und die dafür benötigte Zeit $T_{PP}$ entspricht der Zeit, die der Rotor 50 bei seiner augenblicklichen Drehzahl für eine Viertel-Umdrehung benötigt.

**Beispiel**

Die Zeit $T_{PP}$ soll 1 ms = 0,001 s betragen. Dann benötigt der Rotor 50 für eine volle Umdrehung

$$4 \times 0{,}001 = 0{,}004 \text{ Sekunden, und seine Drehzahl beträgt}$$

$$1/0{,}004 = 250 \text{ U/s}$$

Da eine Minute 60 Sekunden hat, dreht sich der Rotor 50 mit einer Drehzahl von

$$(1/0{,}004) \times 60 = 15.000 \text{ U/min} \tag{1}$$

Da die Zeit für eine volle Umdrehung (oder sogar einen Teil einer Umdrehung) bei einem Elektromotor 49 mit Hall-IC 60 leicht und mit sehr guter Genauigkeit gemessen werden kann, arbeitet man besonders bei Drehzahlreglern für Elektromotoren bevorzugt mit der Zeit $T_{PP}$ oder einem N-fachen von ihr (N = 1, 2, 3, ...), da diese Größe direkt nach ihrer Messung verwendet werden kann und auch für die Steuerung der Kommutierung des Motors benötigt wird. Diese Zeit stellt also im Rahmen eines Elektromotors ein bequemeres Maß für die Drehzahl dar als eine der anderen Größen wie U/min oder U/s, und $T_{PP}$ kann bei Bedarf leicht in U/min umgerechnet werden, indem man den Kehrwert der für eine Drehung von 360° mech. benötigten Zeit $T_{360° \text{ mech}}$ bildet und mit 60 multipliziert, also

$$n_{(rpm)} = 60/T_{360° \text{ mech}} \tag{2}$$

Hierbei muss die Zeit T in Sekunden eingesetzt werden.

Wie Fig. 1 zeigt, hat der als Beispiel dargestellte Elektromotor 49 zwei Statorwicklungen 33, 35. Die Wicklung 33 liegt in Reihe mit einem MOSFET 37 zwischen Plus und Masse 41, und die Wicklung 35 in Reihe mit einem MOSFET 39. Die beiden MOSFETs 37, 39 stellen die Endstufen des Motors 49 dar. Der Gesamtstrom durch den Motor 49 ist mit i bezeichnet und in Fig. 3B schematisch dargestellt.

Die Endstufen 37, 39 werden gesteuert von einem Rechner 43, gewöhnlich einem Mikrocontroller ($\mu$C), dem die Signale HALL vom Hall-IC 60 zugeführt werden. In Form von Programmmodulen, die nur symbolisch angedeutet sind, enthält der $\mu$C 43 eine Kommutierungssteuerung 47 "COMM", einen Drehzahlregler 48 "n_CTL", ein Berechnungsglied 51 "SW_CALC" für die Berechnung eines Drehzahl-Sollwerts $T_{Soll}$ für den Regler 48, eine Alarmsteuerung 54 zur Erzeugung eines Signals ALARM für den Fall, dass die Drehzahl des Motors 49 zu hoch oder zu niedrig wird, ein ROM 55 für die Speicherung eines Programms, und einen Alarmverzögerungszähler 56 "AVZ", der mit der Alarmsteuerung 54 zusammenwirkt, welche einen Ausgang 57 für das Signal ALARM hat. Der AVZ 56 bewirkt, dass ein Alarm nicht direkt ausgelöst wird, sondern erst, wenn eine Alarmbedingung z.B. während einer Minute kontinuierlich bestanden hat.

Dem Modul 51 für die Sollwertberechnung wird von außen, z.B. von einem externen Geber oder Sensor 58, ein entsprechendes Signal zugeführt und in SW-CALC 51 in einen Drehzahl-Sollwert $n_{Soll}$ oder $T_{Soll}$ umgewandelt. Dies geschieht bevorzugt mittels einer Tabelle, die im ROM 55 gespeichert sein kann.

Diese Berechnung eines Sollwerts erfordert viele Rechenschritte und folglich viel Zeit und wird deshalb bevorzugt in mehrere kürzere Teile unterteilt. Wichtig ist, dass diese Berechnungen nicht die Kommutierung des Motors 49 stören dürfen, damit dieser ruhig läuft. Aber auch die kürzeren Teile der Sollwertberechnung können so lange dauern, dass sie die exakte Kommutierung des Motors 49 beeinträchtigen. Dasselbe gilt für die Rechenroutinen des Drehzahlreglers 48 und des Alarmmoduls 54.

Naturgemäß ist der dargestellte Motor 49 nur ein - sehr einfaches - Beispiel für einen beliebigen elektronisch kommutierten Motor, dient lediglich dazu, das Verständnis der Erfindung zu erleichtern, und beschränkt diese in keiner Weise.

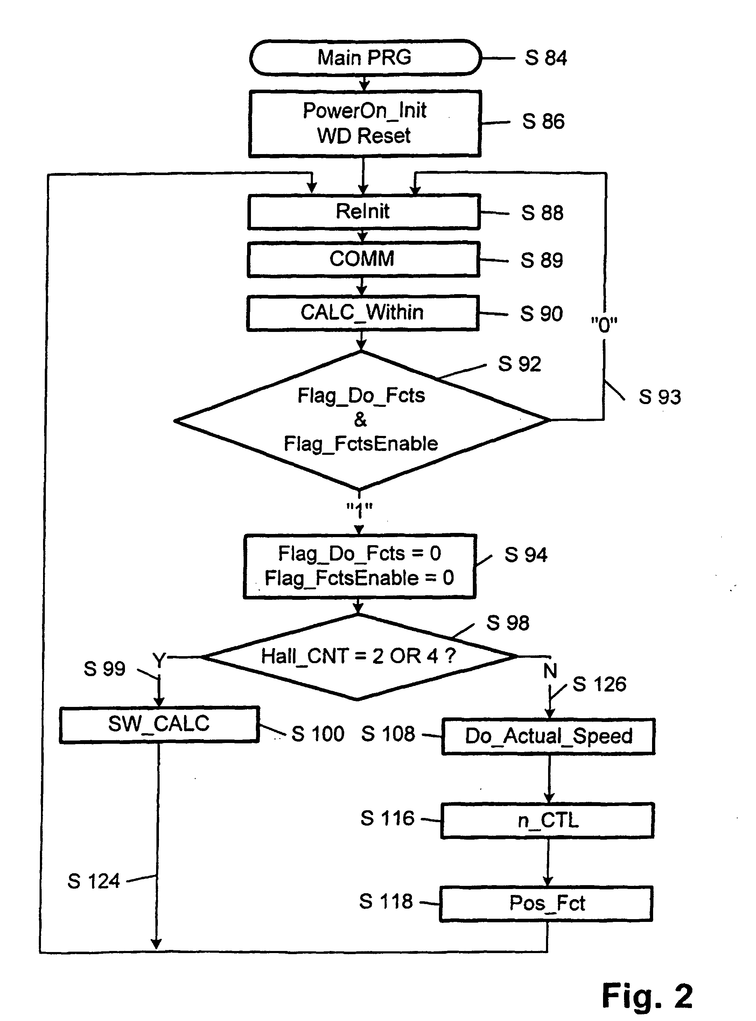

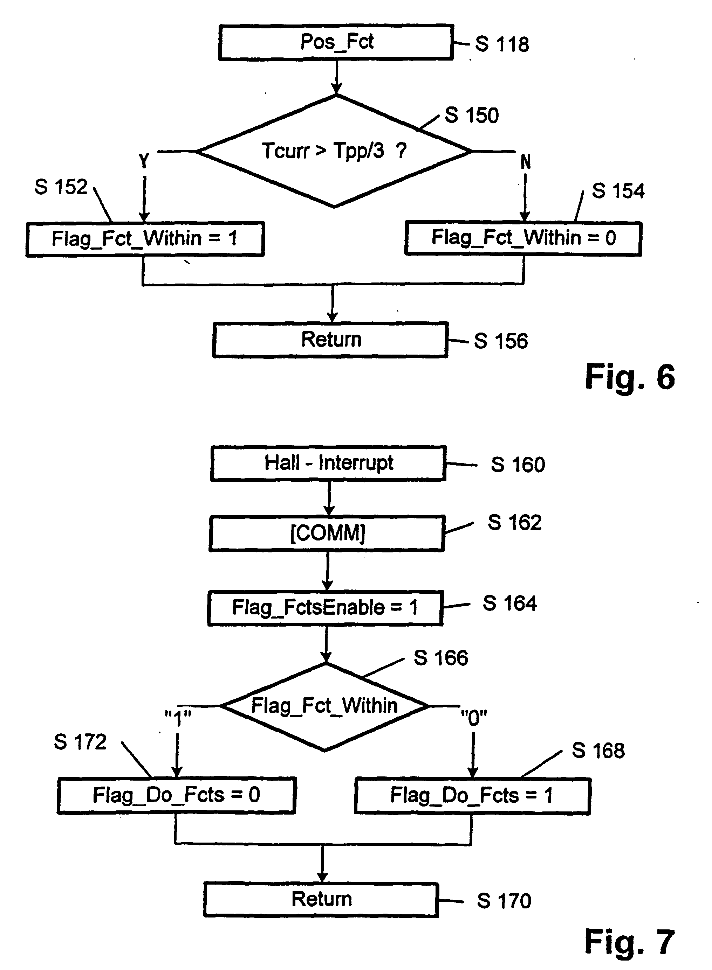

**Fig. 2** zeigt die Grundstruktur des Programmablaufs im $\mu$C 43 während der Drehung des Rotors 50. Dieses Programm arbeitet zusammen mit einer Hall-Interrupt-Routine, die bei Fig. 7 beschrieben wird. Jede Flanke 142 (Fig. 3) des Signals HALL bewirkt einen Interrupt, in dem verschiedene Programmschritte ablaufen und die Werte von zwei Flags bestimmt werden, nämlich von

Flag_FctsEnable

und von

Flag_Do_Fcts.

Das Gesamtprogramm Main PRG der Fig. 2 ist mit S84 bezeichnet. Nach dem Einschalten geht es zum Schritt S86, wo eine Einschalt-Initialisierung PowerOn_Init stattfindet und der Watchdog WD des Rechners 43 zurückgesetzt wird. Anschließend geht das Programm zu S88, wo bei jedem Durchlauf eine Re-Initialisierung der wichtigsten Werte stattfindet. Es folgt S89, wo der Kommutierungszustand des Motors 49 fortlaufend überprüft wird, ob eine der Endstufen 37, 39 ein- oder ausgeschaltet werden muss. Diese ständige Überprüfung wird auch als Polling bezeichnet.

Der nachfolgende Schritt S90 enthält eine Routine CALC_Within, die in Fig. 8 dargestellt ist und die bestimmte Einstellungen vornimmt, nachdem der Strom in einem der Stränge 33, 35 eingeschaltet worden ist.

Anschließend geht das Programm zu S92 und prüft dort, welchen Wert die Flags Flag_FctsEnable und Flag_Do_Fcts haben. Wenn dieser Wert "1" ist, geht das Programm zu S94, wo diese beiden Flags auf "0" gesetzt werden, damit beim nächsten Durchlauf im Schritt S92 die Antwort "0" lautet und das Programm in eine kurze Schleife S93 eintritt, in der in sich wiederholenden Schritten, z.B. alle 100 $\mu$s, geprüft wird, ob eine der Endstufen 37, 39 ein- oder ausgeschaltet werden muss.

Auf S94 folgt ein Schritt S98, wo der Zählerstand eines Hallzählers Hall_CNT geprüft wird. Ist dieser Zählerstand gerade, so geht das Programm in einen linken Zweig S99, und ist er ungerade, so geht es in einen rechten Zweig S126.

Im linken Zweig S99 geht das Programm zu S100, wo die Sollwerterfassung SW_CALC (determination of speed setpoint) durchgeführt wird.

Falls in S98 die Antwort NEIN lautet, geht das Programm über den rechten Zweig S126 zu S108 Do_Actual_Speed, wo die Istwerterfassung durchgeführt, also ein Wert gemessen oder berechnet wird, der die augenblickliche Drehzahl des Rotors 50 charakterisiert. Auf S108 folgt in S116 ein Regler, z.B. der Drehzahlregler n_CTL, der in Fig. 1 bei 48 dargestellt ist, oder ein Stromregler, und danach kommt in S118 eine Funktion Pos_Fct, in der festgelegt wird, an welchem Bereich der Rotordrehung die Rechenschritte im unteren Teil der Fig. 2 beim nächsten Durchlauf ausgeführt werden sollen. Diese Routine ist in Fig. 6 dargestellt.Danach geht das Programm in einer Schleife zurück zu S88.

Wenn sich also der Rotor 50 um 360° mech. dreht, durchläuft das Programm vier Mal den Schritt S98, wobei Hall_CNT z.B. nacheinander die Werte 1, 2, 3, 4 annimmt, wie in Fig. 1 bei dem Signal HALL dargestellt. Dadurch wird entweder in S100 der Sollwert für die Drehzahl berechnet, oder es wird in S108 die aktuelle Drehzahl erfasst, anschließend im Regler n_CTL verarbeitet, und anschließend erfolgt in S118 eine Berechnung, die festlegt, an welcher Stelle der Rotordrehung eine vorgegebene Routine ausgeführt werden soll. An S118 kann sich auch noch eine Routine für die Erzeugung des Signals ALARM anschließen.

**Fig. 3** erläutert die Probleme der Erfindung an einem einfachen Schaubild. In Fig. 3A ist das Hallsignal HALL für den vierpoligen Rotor 50 dargestellt, in Fig. 3B der Gesamtstrom i für den dargestellten Motor 49 bei mittlerer Belastung, und Fig. 3C zeigt kritische Zeitpunkte im Leben des µC 43, welcher den Motor 49 steuert und regelt.

Wie Fig. 3A und 3B zeigen, ist man bestrebt, den Strom im Motor 49 so zu steuern, dass seine Stromblöcke 132, 134, 136, 138, 140 etwa symmetrisch zum Signal HALL verlaufen, weil sich dann ein guter Wirkungsgrad des Motors ergibt. Man nennt das eine "Mittenkommutierung", d.h. der Strom fließt dort, wo das motorisch am günstigsten ist. Mit zunehmender Drehzahl werden die Stromblöcke 132 bis 140 bevorzugt etwas nach links verschoben, was man als Frühkommutierung bezeichnet. Dies ist nur für den Stromblock 134 symbolisch als verschobener Stromblock 134' dargestellt.

Damit die Elektronik des Motors 49 ständig weiß, welche Drehstellung der Rotor 50 hat, müssen die Flanken 142 des Signals HALL sehr genau erfasst werden, nämlich durch Interrupt-Vorgänge, die in Fig. 3C mit "a" bezeichnet sind. Hierzu dient die Hall-Interrupt-Routine der Fig. 7, die den Zeitpunkt einer Flanke 142 sehr exakt ermittelt. Anhand der zeitlichen Abstände zwischen den Flanken 142 kann dann die Elektronik sehr genau die Zeit $T_{PP}$ messen oder berechnen, die der Rotor 50 benötigt, um eine Polteilung PP zu durchlaufen.

Kritisch ist in Fig. 3 ferner der Zeitbereich b, an dem der Strom i in einem der beiden Wicklungssträngen 33, 35 eingeschaltet wird, und ebenso der Zeitbereich c, an dem dieser Strom i wieder abgeschaltet wird. Die entsprechenden Zeitpunkte werden von der Elektronik im voraus berechnet, und der Strom i muss möglichst exakt am berechneten Zeitpunkt b eingeschaltet und möglichst exakt am berechneten Zeitpunkt c abgeschaltet werden. Wird der Strom am Zeitpunkt b verspätet eingeschaltet, so wird dem Motor 49 zu wenig Energie zugeführt, und seine Drehzahl sinkt. Wird der Strom am Zeitpunkt c zu spät abgeschaltet, so wird dem Motor 49 zu viel Energie zugeführt, und seine Drehzahl steigt. Dadurch wird die Drehung des Rotors 50 ungleichmässig, und es entstehen Schwingungen und Geräusche.

Deshalb sollten die Zeitbereiche b und c von anderen Rechenvorgängen möglichst frei gehalten werden, damit eine saubere, exakte Kommutierung möglich ist und der Motor 49 geräuscharm läuft.

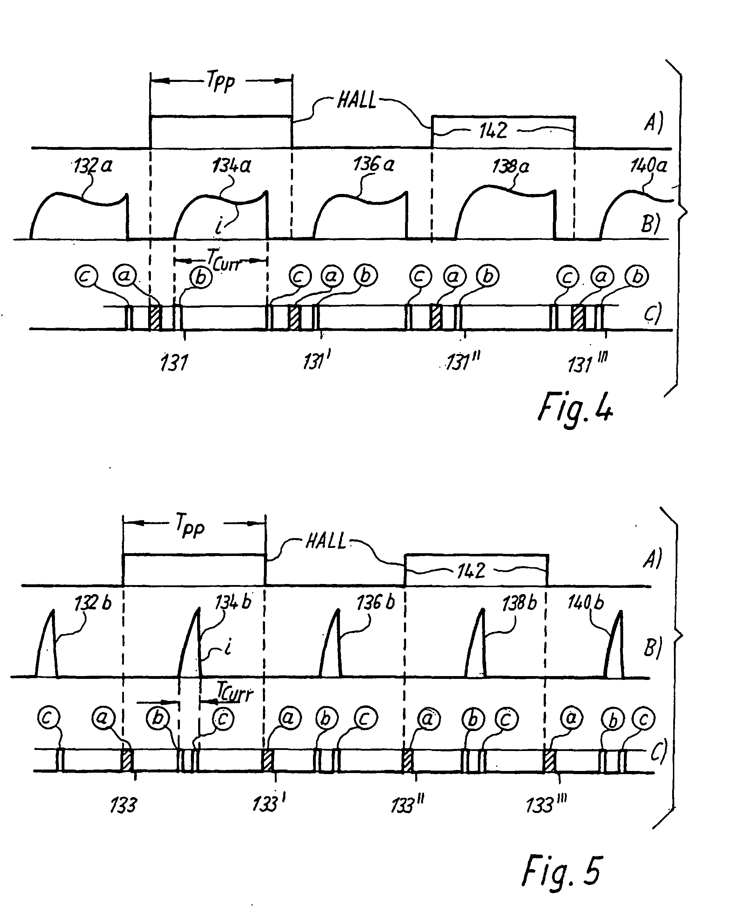

**Fig. 4** zeigt eine Darstellung analog Fig. 3, aber mit langen Bestromungsblöcken 132a, 134a, 136a, 138a und 140a, wie sie bei hohen Drehzahlen erforderlich sind. Diese langen Bestromungsblöcke haben zur Folge, dass die Stellen c, a und b eng aneinander rücken, so dass zwischen ihnen nur sehr kurze Berechnungen durchgeführt werden könnten. Deshalb werden bei der vorliegenden Erfindung länger dauernde Berechnungen in diesem Fall zwischen einem Punkt b und dem darauffolgenden Punkt c durchgeführt, also während der Zeit, in der im Motor ein Stromblock fließt.

**Fig. 5** zeigt den umgekehrten Fall, dass die Bestromungsblöcke 132b, 134b, 136b, 138b und 140b sehr kurz werden, weil der Motor mit niedriger Drehzahl läuft und folglich wenig Energie benötigt. Dies hat zur Folge, dass die Punkte b und c eng zusammen rücken. Zwischen diesen Punkten könnte also allenfalls eine sehr kurze Berechnung stattfinden, während in der Zeit zwischen dem Hall-Interrupt a und dem darauffolgenden Einschalten b eines Stromblocks genügend Zeit zur Verfügung steht, um auch länger dauernde Berechnungen durchzuführen, da im Falle der Fig. 5 die Drehzahl niedrig und folglich die Zeit $T_{PP}$ recht groß ist.

Die Fig. 3 bis 5 zeigen, dass nur bei langen Bestromungsblöcken (Fig. 4) ein Zeitbereich entsteht, der sehr lange ununterbrochen genutzt werden kann. Je schmaler die Bestromungsblöcke sind, desto mehr wird diese Zeit in kleinere Bereiche zerteilt. Die Zeitbereiche sind dann am gleichmäßigsten verteilt, wenn die Bestromungsblöcke eine Länge $T_{Curr}$ haben, die einem Drittel von $T_{PP}$ entspricht, wie in Fig. 3 dargestellt. Verkleinern sich die Bestromungsblöcke noch weiter, wie in Fig. 5 dargestellt, so wird der Zeitbereich zwischen den Punkten b und c immer kleiner, aber dadurch werden die Zeitbereiche vor dem Punkt b und hinter dem Punkt c entsprechend größer.

Die Erfindung geht deshalb von der Überlegung aus, notwendige Rechenprozeduren bei langen Bestromungsblöcken innerhalb der Bestromungsblöcke und bei kurzen Bestromungsblöcken vor (oder auch nach) deren Beginn durchzuführen, um die Laufruhe des Motors 49 zu verbessern.

Das bedeutet, dass der Fall

$$T_{Curr} = T_{PP}/3 \qquad\qquad (3)$$

die Stelle ist, an der die Berechnung bestimmter Vorgänge von einem Bereich der Rotorumdrehung auf einen anderen Bereicn der Rotorumdrehung umdisponiert werden sollte. Diese Umdisponierung kann ggf. mit einer Schalthysterese erfolgen und wird nachfolgend anhand von Flussdiagrammen ausführlich beschrieben.

In Fig. 2 folgt auf den Schritt S108 der Schritt S116 mit dem Drehzahlregler n_CTL, welcher nach jeder neuen Erfassung des Istwerts (in S108) einen neuen Wert für die Dauer $T_{Curr}$ eines Bestromungsblocks liefert, z.B. 1256 µs. Dieser (variable) Wert ist in Fig. 3B beispielhaft dargestellt. Außerdem kennt man von der Istwerterfassung in S108 den aktuellsten Drehzahl-Istwert $T_{PP}$, der in Fig. 3A dargestellt ist.

Deshalb schließt sich in Fig. 2 an die Reglerroutine S116 in S118 die Routine Pos_Fct (**Fig. 6**) an, welche dazu dient, die Position bestimmter Rechenroutinen im Programmablauf so festzulegen, dass sie die Kommutierung des Motors 49 nicht stören.

In S150 der Fig. 6 wird geprüft, ob die (vom Regler n_CTL in S116 festgelegte) Bestromungsdauer $T_{Curr}$ größer als 1/3 des Drehzahl-Istwerts $T_{PP}$ ist. Falls die Situation nach Fig. 4 vorliegt, lautet die Antwort JA, d.h. während der Zeitdauer $T_{Curr}$ eines Bestromungsblocks können längere Rechenoperationen ausgeführt werden. Deshalb wird in S152 ein Flag_Fct_Within auf 1 gesetzt.

Liegt dagegen die Situation nach Fig. 5 vor, so lautet in S150 die Antwort NEIN, und deshalb wird in S154 dieses Flag auf 0 gesetzt. Anschließend geht die Routine zu S156 Return.

Durch den Wert des Flag_Fct_Within wird also festgelegt, wo bzw. wann bestimmte Rechenoperationen ausgeführt werden.

Nachdem diese Frage geklärt ist, muss überwacht werden, wann der Zeitpunkt erreicht ist, ab dem diese Rechenoperationen an der in Fig. 6 festgelegten Stelle beginnen können. Hierzu dienen folgende Bedingungen:

**Bedingung 1**

Wenn die Berechnung außerhalb eines Bestromungsblocks 132, 134 etc. erfolgen soll, kann man mit ihr direkt nach Ablauf des Hall-Interrupts beginnen. Dies sind in Fig. 5 die Stellen 133, 133', 133", 133"'.

**Bedingung 2**

Wenn die Berechnung innerhalb eines Bestromungsblocks 132, 134 etc. erfolgen soll, kann sie erst beginnen, wenn

a) der Hall-Interrupt (Routine "a" in Fig. 3)
UND
b) der Start der Bestromung (Routine "b" in Fig. 3)
abgeschlossen sind. Das sind in Fig. 4 die Stellen 131, 131', 131", 131"'.

Diese beiden Bedingungen werden durch die Flags
Flag_FctsEnable
und
Flag_Do_Fcts
definiert.

Jedesmal, wenn eine Flanke 142 des Signals HALL auftritt, was man auch als "Hallwechsel" bezeichnet, weil dabei das Hallsignal entweder von 0 auf 1 oder von 1 auf 0 wechselt, bewirkt dies einen Hall-Interrupt S160, der in **Fig. 7** dargestellt ist.

In S162 werden verschiedene Schritte ausgeführt, z.B. Schritte, die für die Kommutierung notwendig sind, und nach deren Abschluss wird in S164 gesetzt Ftag_FctsEnable = 1,
da die erläuterte Bedingung 1 erfüllt ist.

Wenn mit den Berechnungen jetzt begonnen werden kann, hat das Flag_Fct_Within den Wert 0, vgl. S154 in Fig. 6, und deshalb lautet in S166 die Antwort "0", und das Flag_Do_Fcts wird in S168 auf "1" gesetzt. Dann geht die Routine zu S170 Return. Die Rechenoperationen können also an den Stellen 133, 133' etc. der Fig. 5 beginnen.

Damit sind beide Flags gesetzt, und im Hauptprogramm der Fig. 2 lautet in S92 die Antwort "1", so dass eine der Funktionen im unteren Bereich der Fig. 2 ausgeführt wird. Welche dieser Funktionen ausgeführt wird, hängt vom Zustand des Hallzählers Hall_CNT ab, der in S98 abgefragt wird.

Hat dagegen in S166 der Fig. 7 das Flag_Fct_Within den Wert "1", so wird in S172 gesetzt
Flag_Do_Fcts = 0,
d.h. in S92 der Fig. 2 lautet die Antwort "0", und das Programm geht in die Schleife S93, wiederholt sie mit zeitlichen Abständen von ca. 100 µs, und prüft dabei, ob der Stromblock in dem betreffenden Strang 33 oder 35 der Motorwicklung jetzt eingeschaltet werden muss oder nicht. (Während dieser Überwachung sollten andere Rechenroutinen nicht durchgeführt werden, da sonst der Zeitpunkt des Einschaltens unter Umständen erheblich verzögert werden könnte.)

**Fig. 8** zeigt die entsprechende Routine CALC_Within S90 für den Fall, dass das Flag_Fct_Within den Wert 1 hat. Diese Routine S90 ist auch in Fig. 2 schematisch angegeben.

In S178 wird abgefragt, ob der Strom im betreffenden Strang jetzt eingeschaltet ist. Falls NEIN, geht die Routine direkt zu S180 Return, und die Überwachung, ob der Strom eingeschaltet werden soll, wird fortgesetzt.

Falls in S178 die Antwort JA lautet, wird in S182 geprüft, ob beide Flags

Flag_FctsEnable (S164 in Fig. 7)

UND

Flag_Fct_Within (S152 in Fig. 6)

den Wert 1 haben.

Falls NEIN, geht das Programm zu S180 Return. Falls JA, geht es zu S184, wo gesetzt wird

Flag_Do_Fcts = 1,

d.h. jetzt sind in S92 beide Bedingungen erfüllt, und in Fig. 2 können jetzt die augenblicklich durchzuführenden Rechenschritte unterhalb von S92 ausgeführt werden, wobei, wie bereits beschrieben, in S94 beide Flags der Abfrage S92 auf 0 zurückgesetzt werden, damit beim nächsten Durchlauf durch S92 das Programm wieder in die kurze Schleife S93 geht, um die Abschaltung des Stromes im augenblicklich Strom führenden Strang 33 oder 35 mit dichten zeitlichen Abständen zu überwachen, z.B. alle 100 μs.

In diesem Fall können also die Berechnungen unterhalb von S92 (Fig. 2) erst ab den Stellen 131, 131', 131" etc der Fig. 4 ausgeführt werden, da erst hier folgende Bedingungen erfüllt sind

Flag_FctsEnable = 1

UND

Flag_Do_Fcts = 1

In Fig. 4 erfolgen diese Berechnungen ab den Stellen 131, 131' etc, also während der Zeit, in der ein Strom durch den Strang 33 oder 35 fließt.

In den nachfolgenden Fig. 9 und 10 haben die Buchstaben a, b und c dieselbe Bedeutung wie in Fig. 3.

**Fig. 9** zeigt die Verhältnisse bei einer Drehzahl von 1500 rpm. Für eine Umdrehung braucht der Rotor 50 hier 40 ms, d.h. pro Viertelumdrehung, also für eine Polteilung PP, braucht er 10 ms = 10000 μs.

Unterstellt man, dass vom Regler n_CTL ein Stellwert $T_{Curr}$ von 1,35 ms vorgegeben wird, da hier wenig Energie benötigt wird, bleibt vor jedem Stromimpuls 132c, 134c eine Zeit von etwa 4 ms, in der Berechnungen durchgeführt werden können, z.B. vor dem Impuls 132c die Berechnungen in S100 der Fig. 2, und vor dem Impuls 134c die Berechnungen in S108, S116 und S118, wie in Fig. 9B angegeben. Diese finden dann nach einem Hall-Interrupt "a" und vor dem Einschalten "b" eines Stromimpulses 132c, 134c etc statt.

**Fig. 10** zeigt im gleichen Zeitmaßstab wie Fig. 9 die Verhältnisse bei 4500 U/min. In diesem Fall dauert eine volle Umdrehung des Rotors 50 13,33 ms, und eine Viertelsumdrehung dauert folglich 3,33 ms.

Unterstellt man einen Stellwert $T_{Curr}$ (vom Regler n_CTL) von 3 ms = 3000 μs, so bleiben für die Rechenvorgänge z.B. 2900 μs verfügbar. Während des Stromimpulses 132d können folglich die Rechenvorgänge in S100 der Fig. 2 ausgeführt werden, und während des Stromimpulses 134d die Vorgänge in den Schritten S108, S116 und S118, wie in Fig. 10B dargestellt. Diese finden also statt nach dem Einschaltvorgang "b" eines Stromimpulses 132d, 134d etc, und vor dessen Abschaltvorgang "c".

Ggf. müssen die Vorgänge im unteren Teil der Fig. 2 auf mehrere Subroutinen verteilt werden. Z.B. könnte man die Routine SW_CALC, sofern sie lang ist, auf zwei Routinen SW_CALC1 und SW-CALC2 aufteilen, von denen jede kürzer ist als 2 ms, damit sich die verschiedenen Berechnungen nicht gegenseitig stören. In diesem Fall würde man dann z.B. SW_CALC1 während des Stromimpulses 132d ausführen, SW_CALC2 während des Stromimpulses 134d, und die Schritte S108, S116 und S118 während des folgenden Stromimpulses 136d. Auf diese Weise sind viele Varianten möglich, die an Art, Länge und Priorität der durchzuführenden Berechnungen angepasst sind. Da besonders die Berechnung des Sollwerts in manchen Fällen sehr viel Rechenzeit erfordert, muss diese Funktion öfter aufgerufen werden als z.B. die Funktion S108, die auf einer einfachen Zeitmessung beruht.

Eine bevorzugte Art der Kommutierung mittels Polling ist in der DE 200 22 114.0 U1 (D242 = DE-3060G) ausführlich beschrieben, weshalb hierauf Bezug genommen wird, um Längen zu vermeiden. Die Kommutierung kann auf verschiedene Arten erfolgen, wie dem Fachmann bekannt ist, wobei die Kommutierung nach der der DE 200 22 114.0 U1 bevorzugt wird.

Naturgemäß sind im Rahmen der vorliegenden Erfindung vielfache Abwandlungen und Modifikationen möglich. Durch die Berücksichtigung zusätzlicher Variablen, z.B. von Art, Dauer und Priorität der Berechnungen, die im Augenblick ausgeführt werden müssen, ergeben sich vielfältige Möglichkeiten für weitere Ausgestaltungen und Verfeinerungen des erfinderischen Konzepts, das in den unabhängigen Ansprüchen definiert ist.

**Patentansprüche**

1. Verfahren zur Verarbeitung von Daten bei einem elektronisch kommutierten Motor (49), welcher einen permanentmagnetischen Rotor (50), eine Anordnung (60) zur Erfassung der Stellung dieses Rotors (50), und einen Stator mit mindestens einer Wicklungsphase (33, 35) aufweist, welchem Motor (49) zur Steuerung der Kommutierung und zur Durchführung von Rechenvorgängen ein Rechner (43) nach Art eines Mikroprozessors oder Mikrocontrollers und ein von diesem Rechner (43) auszuführendes Programm (55) zugeordnet sind, mit folgenden Schritten:

a) Durch den Rechner (43) in Verbindung mit dem Programm (55) werden der Rotorstellungsbereich, in dem ein Stromimpuls (132, 134, 136, 138, 140) durch die mindestens eine Wicklungsphase (33, 35) fließen soll, und die Dauer ($T_{Curr}$) dieses Stromimpulses, in sich wiederholenden Schritten festgelegt;
b) in sich wiederholenden Schritten wird die drehzahlabhängige Zeitdauer ($T_{PP}$) erfasst, welche der Rotor (50) zum Durchlaufen eines vorgegebenen Drehwinkelbereichs (PP) benötigt;
c) das Verhältnis zwischen dieser drehzahlabhängigen Zeitdauer ($T_{PP}$) und der Dauer ($T_{Curr}$) der Stromimpulse wird überwacht;
d) abhängig von der Größe dieses Verhältnisses wird mindestens eine vorgegebene Rechenoperation im Rechner (43)

- entweder während der Dauer ($T_{Curr}$) eines Stromimpulses
- oder in einem Zeitbereich außerhalb eines Stromimpulses ausgeführt.

2. Verfahren nach Anspruch 1, bei welchem als drehzahlabhängige Zeitdauer eine Polteilungs-Zeitdauer ($T_{PP}$) verwendet wird, die ein permahentmagnetischer Rotor (50) zum Durchlaufen eines Drehwinkels benötigt, der dem N-fachen einer Polteilung (PP) seines Permanentmagneten entspricht, wobei N = 1, 2, 3, ... .

3. Verfahren nach Anspruch 2, bei welchem dann, wenn die Bestromungsdauer ($T_{Curr}$) größer als ein Drittel der Polteilungs-Zeitdauer ($T_{PP}$) wird, welche für das Durchlaufen einer einzigen Polteilung (PP) des permanentmagnetischen Rotors (50) benötigt wird, die vorgegebene Rechenoperation während der Dauer ($T_{Curr}$) des Stromimpulses (132, 134, 136, 138, 140) ausgeführt wird.

4. Verfahren nach Anspruch 2 oder 3, bei welchem dann, wenn die Bestromungsdauer ($T_{Curr}$) kleiner als ein Drittel der Polteilungs-Zeitdauer ($T_{PP}$) wird, welche für das Durchlaufen einer einzigen Polteilung (PP) des permanentmagnetischen Rotors (50) benötigt wird, die vorgegebene Rechenoperation außerhalb der Dauer ($T_{Curr}$) des Stromimpulses (132, 134, 136, 138, 140) ausgeführt wird.

5. Verfahren nach Anspruch 4, bei welchem die vorgegebene Rechenoperation vor dem Beginn eines solchen Stromimpulses (132, 134, 136, 138, 140) ausgeführt wird.

6. Elektronisch kommutierter Motor (49), welcher einen permanentmagnetischen Rotor (50), eine Anordnung (60) zur Erfassung der Drehstellung dieses Rotors (50), und einen Stator mit mindestens einem Wicktungsstrang (33, 35) aufweist, wobei dem Motor (49) zur Steuerung seiner Kommutierung und zur Durchführung von Rechenvorgängen ein Rechner (43) nach Art eines Mikroprozessors oder Mikrocontrollers und ein von diesem Rechner (43) auszuführendes Programm (55) zugeordnet sind, welch letzteres zur Ausführung folgender Schritte ausgebildet ist:

a) Durch den Rechner (43) in Verbindung mit dem Programm (55) werden der Rotorstellungsbereich, in dem ein Stromimpuls (132, 134, 136, 138, 140) durch den mindestens einen Wicklungsstrang (33, 35) fließen soll, und die Dauer ($T_{Curr}$) dieses Stromimpulses, in sich wiederholenden Schritten festgelegt;
b) in sich wiederholenden Schritten wird die drehzahlabhängige Zeitdauer ($T_{PP}$) erfasst, welche der Rotor (50) zum Durchlaufen eines vorgegebenen Drehwinkelbereichs benötigt;
c) das Verhältnis zwischen dieser drehzahlabhängigen Zeitdauer ($T_{PP}$) und der Dauer ($T_{Curr}$) der Stromimpulse (132, 134, 136, 138, 140) wird überwacht;
d) abhängig von der Größe dieses Verhältnisses wird mindestens eine vorgegebene Rechenoperation im Rechner (43) entweder während der Dauer ($T_{Curr}$) eines Stromimpulses (132, 134, 136, 138, 140) oder in einem Zeitbereich außerhalb eines Stromimpulses (132, 134, 136, 138, 140) ausgeführt.

7. Motor nach Anspruch 6, bei welchem als drehzahlabhängige Zeitdauer eine Polteilungs-Zeitdauer ($T_{PP}$) verwendet wird, die ein permanentmagnetischer Rotor (50) zum Durchlaufen eines Drehwinkels benötigt, der dem N-fachen einer Polteilung (PP) seines Permanentmagneten entspricht, wobei N = 1, 2, 3, ... .

8. Motor nach Anspruch 7, bei welchem dann, wenn die Bestromungsdauer ($T_{Curr}$) größer als ein Drittel der Polteilungs-Zeitdauer ($T_{PP}$) wird, welche der Rotor (50) für das Durchlaufen einer einzigen Polteilung (PP) benötigt, die vorgegebene Rechenoperation während der Dauer ($T_{Curr}$) des Stromimpulses (132, 134, 136, 138, 140) ausgeführt wird.

**9.** Motor nach Anspruch 7 oder 8, bei welchem dann, wenn die Bestromungsdauer ($T_{Curr}$) kleiner als ein Drittel der Polteilungs-Zeitdauer ($T_{PP}$) wird, welche der Rotor (50) für das Durchlaufen einer einzigen Polteilung (PP) benötigt, die vorgegebene Rechenoperation außerhalb der Dauer des Stromimpulses (132, 134, 136, 138, 140) ausgeführt wird.

**10.** Motor nach Anspruch 9, bei welchem die vorgegebene Rechenoperation vor dem Beginn eines solchen Stromimpulses (132, 134, 136, 138, 140) ausgeführt wird.


**Claims**

**1.** Method for processing data for an electronically commutated motor (49) which comprises a permanent magnet rotor (50), an arrangement (60) for detecting the position of this rotor (50), and a stator with at least one winding phase (33, 35), which motor (49) for controlling the commutation and for carrying out computing operations has an associated computer (43) of the kind of a microprocessor or microcontroller and a programme (55) to be executed by this computer (43), with the following steps:

a) the rotor position range in which a current pulse (132, 134, 136, 138, 140) is to flow through the at least one winding phase (33, 35), and the duration ($T_{Curr}$) of this current pulse are determined by the computer (43) in conjunction with the programme (55) in recurrent steps;
b) the length of time ($T_{PP}$) dependent on the rotational speed which the rotor (50) requires to run through a predetermined rotational angle range (PP) is detected in recurrent steps;
c) the ratio between this length of time ($T_{PP}$) dependent on the rotational speed and the duration ($T_{Curr}$) of the current pulses is monitored;
d) depending on the magnitude of this ratio, at least one predetermined computing operation is carried out in the computer (43)

- either in the course of the duration ($T_{Curr}$) of a current pulse
- or in a time range outside a current pulse.

**2.** Method according to claim 1, in which for the length of time dependent on the rotational speed use is made of a pole division time ($T_{PP}$) which a permanent magnet rotor (50) requires to run through a rotational angle which corresponds to N times a pole division (PP) of its permanent magnet, for which N = 1, 2, 3, ... .

**3.** Method according to claim 2, in which the predetermined computing operation is carried out in the course of the duration ($T_{Curr}$) of the current pulse (132, 134, 136, 138, 140) when the energisation time ($T_{Curr}$) becomes greater than a third of the pole division time ($T_{PP}$) required to run through a single pole division (PP) of the permanent magnet rotor (50).

**4.** Method according to claim 2 or 3, in which the predetermined computing operation is carried out outside the duration ($T_{Curr}$) of the current pulse (132, 134, 136, 138, 140) when the energisation time ($T_{Curr}$) becomes less than a third of the pole division time ($T_{PP}$) required to run through a single pole division (PP) of the permanent magnet rotor (50).

**5.** Method according to claim 4, in which the predetermined computing operation is carried out before the beginning of such a current pulse (132, 134, 136, 138, 140).

**6.** Electronically commutated motor (49) which comprises a permanent magnet rotor (50), an arrangement (60) for detecting the rotational position of this rotor (50), and a stator with at least one winding phase (33, 35), in which for controlling its commutation and for carrying out computing operations the motor (49) has an associated computer (43) of the kind of a microprocessor or microcontroller and a programme (55) to be executed by this computer (43), which programme is designed to carry out the following steps:

a) the rotor position range in which a current pulse (132, 134, 136, 138, 140) is to flow through the at least one winding phase (33, 35), and the duration ($T_{Curr}$) of this current pulse are determined by the computer (43) in conjunction with the programme (55) in recurrent steps;
b) the length of time ($T_{PP}$) dependent on the rotational speed which the rotor (50) requires to run through a predetermined rotational angle range (PP) is detected in recurrent steps;

c) the ratio between this length of time ($T_{PP}$) dependent on the rotational speed and the duration ($T_{Curr}$) of the current pulses (132, 134, 136, 138, 140) is monitored;

d) depending on the magnitude of this ratio, at least one predetermined computing operation is carried out in the computer (43) either in the course of the duration ($T_{Curr}$) of a current pulse (132, 134, 136, 138, 140) or in a time range outside a current pulse (132, 134, 136, 138, 140).

7. Motor according to claim 6, in which for the length of time dependent on the rotational speed use is made of a pole division time ($T_{PP}$) which a permanent magnet rotor (50) requires to run through a rotational angle which corresponds to N times a pole division (PP) of its permanent magnet, for which N = 1, 2, 3, ... .

8. Motor according to claim 7, in which the predetermined computing operation is carried out in the course of the duration ($T_{Curr}$) of the current pulse (132, 134, 136, 138, 140) when the energisation time ($T_{Curr}$) becomes greater than a third of the pole division time ($T_{PP}$) which the rotor (50) requires to run through a single pole division (PP).

9. Motor according to claim 7 or 8, in which the predetermined computing operation is carried out outside the duration ($T_{Curr}$) of the current pulse (132, 134, 136, 138, 140) when the energisation time ($T_{Curr}$) becomes less than a third of the pole division time ($T_{PP}$) which the rotor (50) requires to run through a single pole division (PP).

10. Motor according to claim 9, in which the predetermined computing operation is carried out before the beginning of such a current pulse (132, 134, 136, 138, 140).

**Revendications**

1. Procédé de traitement de données avec un moteur à commutation électronique (49) qui présente un rotor à aimant permanent (50), un dispositif (60) pour saisir la position de ce rotor (50) et un stator avec au moins une phase d'enroulement (33, 35), auquel moteur (49) sont associés, pour la commande de la commutation et pour l'exécution d'opérations de calcul, un ordinateur (43) de type microprocesseur ou microcontrôleur et un programme (55) à exécuter par cet ordinateur (43) et présentant les pas suivants :

a) l'ordinateur (43) détermine en combinaison avec le programme (55), par pas répétitifs, la plage de positions de rotor dans laquelle une impulsion de courant (132, 134, 136, 138, 140) doit circuler à travers la ou les phase(s) d'enroulement (33, 35) et la durée ($T_{Curr}$) de cette impulsion de courant ;

b) on saisit, par pas répétitifs, la durée dépendante de la vitesse de rotation ($T_{PP}$) dont a besoin le rotor (50) pour parcourir une plage angulaire (PP) définie ;

c) on surveille le rapport entre cette durée dépendante de la vitesse de rotation ($T_{PP}$) et la durée ($T_{Curr}$) des impulsions de courant ;

d) en fonction de la grandeur de ce rapport, on effectue au moins une opération de calcul définie dans l'ordinateur (43)

- soit pendant la durée ($T_{Curr}$) d'une impulsion de courant
- soit dans une plage de temps située en dehors d'une impulsion de courant.

2. Procédé selon la revendication 1, dans lequel on utilise comme durée dépendante de la vitesse de rotation une durée de pas polaire ($T_{PP}$) dont un rotor à aimant permanent (50) a besoin pour parcourir un angle de rotation qui correspond au $N^{ième}$ multiple d'un pas polaire (PP) de son aimant permanent, avec N = 1, 2, 3, ...

3. Procédé selon la revendication 2, dans lequel, lorsque la durée d'excitation ($T_{Curr}$) est supérieure à un tiers de la durée de pas polaire ($T_{PP}$) qui est nécessaire pour parcourir un seul pas polaire (PP) du rotor à aimant permanent (50), on effectue l'opération de calcul définie pendant la durée ($T_{Curr}$) de l'impulsion de courant (132, 134, 136, 138, 140).

4. Procédé selon la revendication 2 ou 3, dans lequel, lorsque la durée d'excitation ($T_{Curr}$) est inférieure à un tiers de la durée de pas polaire ($T_{PP}$) qui est nécessaire pour parcourir un seul pas polaire (PP) du rotor à aimant permanent (50), on effectue l'opération de calcul définie en dehors de la durée ($T_{Curr}$) de l'impulsion de courant (132, 134, 136, 138, 140).

**5.** Procédé selon la revendication 4, dans lequel on effectue l'opération de calcul définie avant le début d'une telle impulsion de courant (132, 134, 136, 138, 140).

**6.** Moteur à commutation électronique (49) qui présente un rotor à aimant permanent (50), un dispositif (60) pour saisir la position de rotation de ce rotor (50) et un stator avec au moins une phase d'enroulement (33, 35), auquel moteur (49) sont associés, pour la commande de sa commutation et pour l'exécution d'opérations de calcul, un ordinateur (43) de type microprocesseur ou microcontrôleur et un programme (55) à exécuter par cet ordinateur (43), ce dernier étant conçu pour exécuter les pas suivants :

a) l'ordinateur (43) détermine en combinaison avec le programme (55), par pas répétitifs, la plage de positions de rotor dans laquelle une impulsion de courant (132, 134, 136, 138, 140) doit circuler à travers la ou les phase (s) d'enroulement (33, 35) et la durée ($T_{Curr}$) de cette impulsion de courant ;

b) on saisit, par pas répétitifs, la durée dépendante de la vitesse de rotation ($T_{PP}$) dont a besoin le rotor (50) pour parcourir une plage angulaire (PP) définie ;

c) on surveille le rapport entre cette durée dépendante de la vitesse de rotation ($T_{PP}$) et la durée ($T_{Curr}$) des impulsions de courant (132, 134, 136, 138, 140) ;

d) en fonction de la grandeur de ce rapport, on effectue au moins une opération de calcul définie dans l'ordinateur (43), soit pendant la durée ($T_{Curr}$) d'une impulsion de courant (132, 134, 136, 138, 140), soit dans une plage de temps située en dehors d'une impulsion de courant (132, 134, 136, 138, 140).

**7.** Moteur selon la revendication 6, dans lequel on utilise comme durée dépendante de la vitesse de rotation une durée de pas polaire ($T_{PP}$) dont un rotor à aimant permanent (50) a besoin pour parcourir un angle de rotation qui correspond au $N^{ième}$ multiple d'un pas polaire (PP) de son aimant permanent, avec N = 1, 2, 3, ...

**8.** Moteur selon la revendication 7, dans lequel, lorsque la durée d'excitation ($T_{Curr}$) est supérieure à un tiers de la durée de pas polaire ($T_{PP}$) dont le rotor (50) a besoin pour parcourir un seul pas polaire (PP), on effectue l'opération de calcul définie pendant la durée ($T_{Curr}$) de l'impulsion de courant (132, 134, 136, 138, 140).

**9.** Moteur selon la revendication 7 ou 8, dans lequel, lorsque la durée d'excitation ($T_{Curr}$) est inférieure à un tiers de la durée de pas polaire ($T_{PP}$) dont le rotor (50) a besoin pour parcourir un seul pas polaire (PP), on effectue l'opération de calcul définie en dehors de la durée de l'impulsion de courant (132, 134, 136, 138, 140).

**10.** Moteur selon la revendication 9, dans lequel on effectue l'opération de calcul définie avant le début d'une telle impulsion de courant (132, 134, 136, 138, 140).

*Fig.1*

Main PRG — S 84

PowerOn_Init
WD Reset — S 86

ReInit — S 88

COMM — S 89

CALC_Within — S 90

S 92

Flag_Do_Fcts
&
Flag_FctsEnable

"0"

S 93

"1"

Flag_Do_Fcts = 0
Flag_FctsEnable = 0 — S 94

S 98

Hall_CNT = 2 OR 4 ?

S 99  Y

N  S 126

SW_CALC — S 100    S 108 — Do_Actual_Speed

S 116 — n_CTL

S 124

S 118 — Pos_Fct

**Fig. 2**

Fig.3

EP 1 356 582 B1

EP 1 356 582 B1

Fig.4

Fig.5

15

Pos_Fct — S 118

Tcurr > Tpp/3 ? — S 150

Y          N

S 152 — Flag_Fct_Within = 1          Flag_Fct_Within = 0 — S 154

Return — S 156

## Fig. 6

Hall - Interrupt — S 160

[COMM] — S 162

Flag_FctsEnable = 1 — S 164

Flag_Fct_Within — S 166

"1"          "0"

S 172 — Flag_Do_Fcts = 0          Flag_Do_Fcts = 1 — S 168

Return — S 170

## Fig. 7

Fig. 8

Fig. 9

Fig. 10